# FASCICULE DE BREVET EUROPEEN

(11) **EP 0 903 272 B1**
(45) Date de publication et mention de la délivrance du brevet: **20.11.2002**
(21) Numéro de dépôt: 98117758.7
(22) Date de dépôt: 18.09.1998
(51) Int. Cl.: B60S 1/40

(54) **Essuie-glace de véhicule automobile comportant des moyens perfectionnés d'articulation d'un balai d'essui-glace sur un bras d'essuie-glace**
Kraftfahrzeugscheibenwischer mit verbesserter Vorrichtung für die Gelenkverbindung zwischen einem Wischblatt und einem Wischarm
Vehicle windscreen wiper with improved means for the articulation of a wiper blade on a wiper arm

(30) Priorité: 19.09.1997 FR 9711784
(43) Date de publication de la demande: 24.03.1999
(73) Titulaire: VALEO SYSTEMES D'ESSUYAGE, 78321 La Verrière (FR)
(72) Inventeur: Jarasson, Jean-Michel, 93130 Noisy Le Sec (FR)
(74) Mandataire: Gamonal, Didier

(56) Documents cités:
- DE-A- 3 938 041
- FR-A- 2 548 115
- FR-A- 2 746 749
- US-A- 5 647 087

## Description

L'invention concerne un essuie-glace de véhicule automobile comportant des moyens perfectionnés d'articulation d'un balai d'essuie-glace sur un bras d'essuie-glace.

L'invention concerne plus particulièrement un essuie-glace de véhicule automobile, du type comportant un balai d'essuie-glace qui est articulé autour d'un axe transversal à une extrémité longitudinale libre d'un bras d'essuie-glace, du type dans lequel une portion d'articulation du balai est reçue à l'intérieur de l'extrémité libre du bras qui est en forme de chape et qui comporte deux ailes latérales longitudinales, et du type dans lequel il est prévu un patin antifriction agencé entre la portion d'articulation du balai et une face intérieure d'au moins une des ailes de la chape.

Un tel type d'essuie-glace est décrit et représenté dans le document FR-A-2.548.115.Dans ce document, l'essuie-glace comporte un dispositif antibruit et antifriction qui est réalisé sous la forme d'un cavalier en matière plastique interposé entre l'extrémité en forme de chape du bras et le balai. Ce cavalier ou étrier antibruit permet d'éviter tout contact direct entre le bras et le balai qui sont réalisés tous les deux en métal.

Cependant, on s'est aperçu que de telles articulations possèdent l'inconvénient qu'il subsiste souvent un léger jeu transversal entre le balai et les faces internes des deux ailes latérales de la chape. Or, l'essuie-glace est en principe entraîné en balayage alterné et sa trajectoire est alors sensiblement tangente à l'axe transversal d'articulation du balai sur le bras. Aussi, à chaque changement de sens du mouvement des essuie-glace, le jeu qui subsiste entre le balai et le bras provoque un claquement qui, même s'il est atténué par un dispositif antibruit classique, n'en reste pas moins perceptible.

L'invention a donc pour objet de proposer une nouvelle conception d'un essuie-glace qui permet d'apporter une solution à ce problème.

Dans ce but, l'invention propose un essuie-glace du type décrit précédemment qui est défini conformément à la partie caractérisante de la première revendication.

Selon d'autres caractéristiques de l'invention :
- la patte est formée par une découpe partielle de l'élément de plaque, la patte étant liée à ce dernier par une extrémité de liaison, et la patte comporte une extrémité libre qui est décalée transversalement par rapport à l'élément de plaque ;
- la patte élastique peut être rabattue de manière à être contenue dans l'épaisseur transversale de l'élément de plaque ;
- le patin antifriction comporte une face latérale qui est munie d'au moins un évidement ;
- le patin comporte un plot cylindrique d'axe transversal qui est emboîté élastiquement dans un orifice correspondant de l'un des composants articulés de l'essuie-glace ;
- le plot cylindrique est tubulaire et fendu selon la direction axiale de manière à pouvoir être comprimé élastiquement radialement vers l'intérieur ;
- une tige d'articulation des deux composants de l'essuie-glace est introduite axialement au travers du plot cylindrique tubulaire ;
- le patin antifriction est fixé sur une face latérale externe de la portion d'articulation du balai d'essuie-glace ;
- le patin comporte un rebord qui s'étend transversalement vers l'intérieur depuis un bord inférieur de l'élément de plaque et qui coopère avec un bord inférieur de la face latérale de la portion d'articulation du balai pour immobiliser le patin en rotation par rapport balai ;
- le patin antifriction comporte plusieurs pattes élastiques ;
- l'essuie-glace comporte deux patins antifriction agencés chacun transversalement d'un côté de la portion d'articulation du balai.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique partielle en perspective éclatée d'un essuie-glace conforme aux enseignements de l'invention ;
- la figure 2 est une vue en coupe longitudinale selon la ligne 2-2 de la figure 3 de l'essuie-glace selon l'invention ;
- la figure 3 est une vue en coupe transversale selon la ligne 3-3 de la figure 2 ; et
- la figure 4 est une vue en coupe transversale selon la ligne 4-4 de la figure 2 illustrant un patin antifriction selon l'invention.

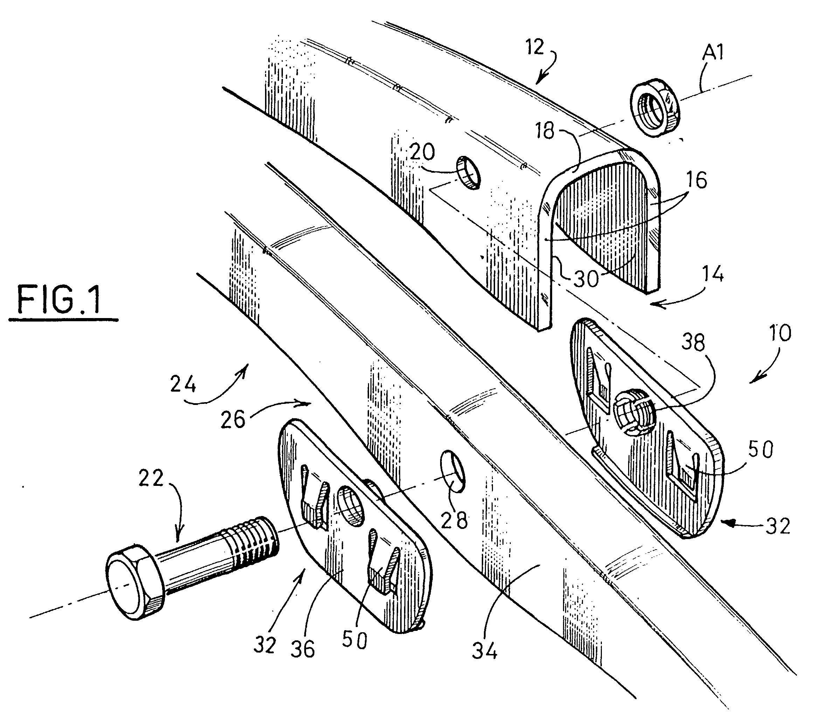

On a représenté sur la figure 1 un essuie-glace 10 qui comporte essentiellement un bras d'essuie-glace 12 dont une extrémité longitudinale libre 14 est en forme de chape, c'est-à-dire qu'elle comporte deux ailes longitudinales parallèles 16 qui sont réunies par un dos supérieur transversal 18 de manière à présenter, en section transversale, une forme de U inversé.

L'extrémité libre 14 en forme de chape comporte deux orifices 20 qui sont aménagés dans chacune de ses ailes 16 afin de permettre le passage d'une vis 22 d'axe transversal A1 qui permet le montage articulé sur le bras 12 d'un balai d'essuie-glace 24 dont on a représenté sur la figure 1 une portion centrale d'articulation 26.

La portion centrale d'articulation 26 du balai 24 peut elle aussi présenter en section transversale la forme d'un U renversé et elle est destinée à être reçue à l'intérieur de la chape 14, c'est-à-dire transversalement entre les deux ailes 16 du bras 12. La portion d'articulation 26 du balai 24 comporte elle aussi des orifices 28 d'axe A1 pour le passage de la vis d'articulation 22.

Conformément aux enseignements de l'invention, il est prévu des moyens qui permettent d'éviter tout contact direct entre le bras 12 et le balai 24 et qui permettent aussi de rattraper un éventuel jeu transversal qui pourrait subsister entre la portion d'articulation 26 du balai 24 et des faces internes 30 des ailes 16 de la chape 14.

A cet effet, on a prévu de part et d'autre du balai 24, selon la direction transversale, des patins antifriction 32 qui sont interposés chacun transversalement entre une face latérale externe 34 de la portion centrale d'articulation 26 et la face interne 30 de l'aile 16 en vis-à-vis.

Comme on peut le voir sur les figures, le patin 32 comporte essentiellement un élément de plaque 36 qui s'étend dans un plan longitudinal parallèle au plan des ailes 16 de la chape 14. Chaque patin 32 comporte un plot cylindrique 38 qui s'étend transversalement en direction de la portion d'articulation 26 de manière à être emboîté élastiquement dans l'orifice 28 correspondant du balai 24.

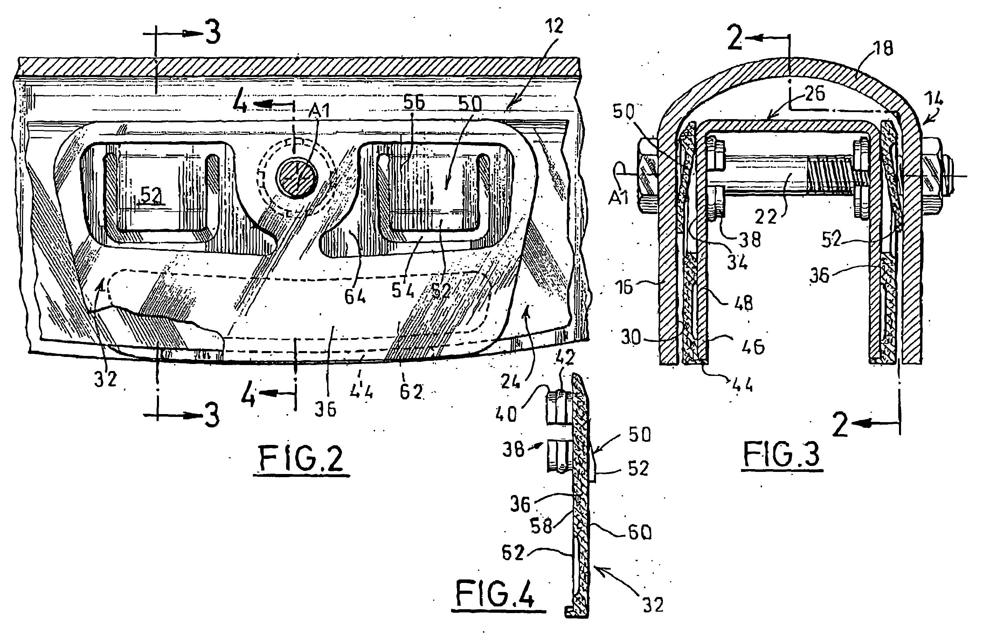

Comme on peut le voir plus particulièrement sur la figure 4, le plot cylindrique 38 est tubulaire de manière à laisser subsister en son centre le passage pour la vis 22. Il est par ailleurs fendu axialement et muni, sur une surface cylindrique externe 40, d'un bourrelet annulaire 42 qui permet, comme on peut le voir sur la figure 3, d'assurer le maintien par emboîtement élastique du patin 36 contre la face latérale externe 34 de la portion d'articulation 26. En effet, les fentes axiales du plot 38 lui permettent d'être comprimé radialement vers l'intérieur, le bourrelet 42 étant ainsi susceptible d'être engagé depuis l'extérieur au travers de l'orifice 28 du balai 24.

Par ailleurs, l'élément de plaque 36 comporte, le long d'un bord longitudinal inférieur, un rebord transversal 44 dirigé vers l'intérieur, en direction du balai 24, de manière à coopérer avec un bord inférieur 46 d'un flanc latéral 48 du balai 24 pour empêcher le patin antifriction 32 de pivoter autour de l'axe A1 par rapport au balai 24.

Ainsi fixé, le patin de friction 32 est donc plaqué contre la face latérale externe 34 de la portion d'articulation 26 et il est immobilisé par rapport à cette dernière.

Conformément aux enseignements de l'invention, chaque patin 32 comporte deux pattes élastiques 50 qui comportent des extrémités libres 52 qui sont écartées transversalement vers l'extérieur par rapport à l'élément de plaque 36 afin de venir en appui transversalement contre les faces internes 30 de chacune des ailes 16 de la chape 14.

Les pattes élastiques 50 sont réalisées directement venues de matière avec le patin antifriction 32 ; elles sont aménagées dans l'épaisseur de l'élément de plaque 36 au moyen d'une découpe 54 en U qui délimite la patte 50, laquelle est donc liée au reste de l'élément de plaque 36 par son extrémité supérieure de liaison 56.

Ainsi le patin 32 peut être réalisé de façon très simple par moulage en matière plastique.

A l'état libre, comme on peut le voir sur les figures 1 et 4, la patte 50 s'étend donc selon une direction oblique vers le bas et vers l'extérieur par rapport à l'élément de plaque 36 de telle sorte que l'extrémité libre inférieure 52 de la patte 50 est susceptible de venir en contact de l'aile 16 de la chape 14.

Comme on peut le voir sur la figure 3, l'épaisseur transversale de la patte élastique 50 est sensiblement égale à l'épaisseur de l'élément de plaque 36 si bien que, dans un cas extrême, la patte 50 peut être comprimée transversalement vers l'intérieur de manière à être entièrement contenue dans le plan de l'élément de plaque 36.

Les deux pattes 50 sont agencées selon la direction longitudinale chacune de part et d'autre du plot cylindrique fendu 38 du patin 32.

Par ailleurs, on peut remarquer sur les figures 2 à 4 qu'il est prévu, dans chacune des faces latérales 58, 60 de l'élément de plaque 36, des évidements 62, 64 qui permettent de réduire localement l'épaisseur de cet élément de plaque. Toutefois, l'élément de plaque 38 comporte sur tout son pourtour une épaisseur constante qui est égale à son épaisseur maximale.

## Revendications

1. Essuie-glace de véhicule automobile, du type comportant un balai d'essuie-glace (24) qui est articulé autour d'un axe transversal (A1) à une extrémité longitudinale libre (14) d'un bras d'essuie-glace (12), du type dans lequel une portion d'articulation (26) du balai (24) est reçue à l'intérieur de l'extrémité libre (14) du bras (12) qui est en forme de chape et qui comporte deux ailes latérales longitudinales (16), et du type dans lequel il est prévu un patin antifriction (32) agencé entre la portion d'articulation (26) du balai (24) et une face intérieure (30) d'au moins une des ailes (16) de la chape (14),
**caractérisé en ce que** le patin antifriction (32) comporte un élément de plaque (36) qui est parallèle à l'aile (16) de la chape (32) et qui est muni d'au moins une patte élastique (50) en saillie transversalement par rapport à l'élément de plaque (36) de telle sorte que le patin (32) est apte à rattraper un jeu transversal entre la chape (14) et la portion d'articulation (26) du balai (24),
et **en ce que** l'élément de plaque (36) est fixé sur un premier (24) des deux composants articulés (12, 24) de l'essuie glace (10) par des moyens d'emboîtement élastique (28, 38) qui maintiennent le patin antifriction (32) plaqué contre la face latérale (34) en vis-à-vis du premier (24) des deux composants articulés (12, 24), la patte élastique (50) étant en appui transversalement contre le second (12) des deux composants articulés (12, 24) de l'essuie-glace (10).

2. Essuie-glace selon la revendication 1, **caractérisé en ce que** la patte (50) est formée par une découpe partielle de l'élément de plaque (36), la patte (50) étant liée à ce dernier par une extrémité de liaison (56), et **en ce que** la patte (50) comporte une extrémité libre (52) qui est décalée transversalement par rapport à l'élément de plaque (36).

3. Essuie-glace selon la revendication 2, **caractérisé en ce que** la patte élastique (50) peut être rabattue de manière à être contenue dans l'épaisseur transversale de l'élément de plaque (36).

4. Essuie-glace selon l'une quelconque des revendications précédentes, **caractérisé en ce que** le patin antifriction (32) comporte une face latérale (58, 60) qui est munie d'au moins un évidement (62, 64).

5. Essuie-glace selon l'une quelconque des revendications précédentes, **caractérisé en ce que** le patin (32) comporte un plot cylindrique (38) d'axe transversal (A1) qui est emboîté élastiquement dans un orifice correspondant (28) du premier (24) des deux composants articulés (12, 24) de l'essuie-glace.

6. Essuie-glace selon la revendication 5, **caractérisé en ce que** le plot cylindrique (38) est tubulaire et fendu selon la direction axiale de manière à pouvoir être comprimé élastiquement radialement vers l'intérieur.

7. Essuie-glace selon la revendication 6, **caractérisé en ce qu'**une tige d'articulation (22) des deux composants (12, 24) de l'essuie-glace (10) est introduite axialement au travers du plot cylindrique tubulaire (38).

8. Essuie-glace selon l'une quelconque des revendications précédentes, **caractérisé en ce que** le patin antifriction (32) est fixé sur une face latérale externe (34) de la portion d'articulation (26) du balai d'essuie-glace (24).

9. Essuie-glace selon la revendication 8, **caractérisé en ce que** le patin (32) comporte un rebord (44) qui s'étend transversalement vers l'intérieur depuis un bord inférieur de l'élément de plaque (36) et qui coopère avec un bord inférieur (46) de la face latérale (48) de la portion d'articulation (26) du balai (24) pour immobiliser le patin (32) en rotation par rapport balai (24).

10. Essuie-glace selon l'une quelconque des revendications précédentes, **caractérisé en ce que** le patin antifriction (32) comporte plusieurs pattes élastiques (50).

11. Essuie-glace selon l'une quelconque des revendications précédentes, **caractérisé en ce qu'**il comporte deux patins antifriction (32) agencés chacun transversalement d'un côté de la portion d'articulation (26) du balai (24).

## Patentansprüche

1. Scheibenwischer für ein Kraftfahrzeugs des Typs mit einem Scheibenwischerblatt (24), das um eine Querachse (A1) herum an einem freien Längsende (14) eines Scheibenwischerarms (12) angelenkt ist, bei dem ein Gelenkabschnitt (26) des Blatts (24) innerhalb des freien Endes (14) des Arms (12) aufgenommen wird, der gabelförmig ist und zwei seitliche Längsschenkel (16) umfasst, und bei dem ein Antifriktionsschuh (32) zwischen dem Gelenkabschnitt (26) des Blatts (24) und einer Innenseite (30) zumindest eines der Schenkel (16) der Gabel (14) vorgesehen ist, **dadurch gekennzeichnet, dass** der Antifriktionsschuh (32) ein Plattenelement (36) umfasst, das parallel zum Schenkel (16) der Gabel (32) verläuft und mindestens eine Federlasche (50) aufweist, die in Bezug auf das Plattenelement (36) quer herausragt, so dass der Schuh (32) ein Querspiel zwischen der Gabel (14) und dem Gelenkabschnitt (26) des Blatts (24) aufholen kann, und dass das Plattenelement (36) an einem ersten (24) der beiden gelenkigen Bestandteile (12, 14) des Scheibenwischers (10) mit federnden Einklinkmitteln (28, 38) befestigt ist, die den Antifriktionsschuh (32) gegen die Seitenfläche (34) gegenüber dem ersten (24) der beiden gelenkigen Bestandteile (12, 24) gedrückt halten, wobei sich die Federlasche (50) quer gegen das zweite (12) der beiden gelenkigen Bestandteile (12, 14) des Scheibenwischers (10) abstützt.

2. Scheibenwischer nach Anspruch 1, **dadurch gekennzeichnet, dass** die Lasche (50) durch einen Teilausschnitt des Plattenelements (36) gebildet wird, wobei die Lasche (50) an einen Verbindungsende (56) mit diesem verbunden ist, und dass die Lasche (50) ein freies Ende (52) aufweist, das in Bezug auf das Plattenelement (36) in Querrichtung versetzt ist.

3. Scheibenwischer nach Anspruch 2, **dadurch gekennzeichnet, dass** die Federlasche (50) so umgeklappt werden kann, dass sie in der Querdicke des Plattenelements (36) enthalten ist.

4. Scheibenwischer nach einem der vorherigen Ansprüche, **dadurch gekennzeichnet, dass** der Antifriktionsschuh (32) eine Seitenfläche (58, 60) umfasst, die mindestens eine Aussparung (62, 64) aufweist.

5. Scheibenwischer nach einem der vorherigen Ansprüche, **dadurch gekennzeichnet, dass** der Schuh (32) einen zylindrischen Stift (38) mit Querachse (A1) umfasst, der federnd in eine entsprechende Öffnung (28) des ersten (24) der beiden gelenkigen Bestandteile (12, 14) des Scheibenwischers einklinkt wird.

6. Scheibenwischer nach Anspruch 5, **dadurch gekennzeichnet, dass** der zylindrische Stift (38) rohrförmig und in axialer Richtung gespalten ist, so dass er federnd radial nach innen zusammengedrückt werden kann.

7. Scheibenwischer nach Anspruch 6, **dadurch gekennzeichnet, dass** eine Gelenkstange (22) der beiden Bestandteile (12, 24) des Scheibenwischers (10) axial durch den rohrförmigen zylindrischen Stift (38) geführt wird.

8. Scheibenwischer nach einem der vorherigen Ansprüche, **dadurch gekennzeichnet, dass** der Antifriktionsschuh (32) an einer seitlichen Außenfläche (34) des Gelenkabschnitts (26) des Scheibenwischerblatts (24) befestigt ist.

9. Scheibenwischer nach Anspruch 8, **dadurch gekennzeichnet, dass** der Schuh (32) eine Krempe (44) umfasst, die sich von einem unteren Rand des Plattenelements (36) quer nach innen erstreckt und mit einem unteren Rand (46) der Seitenfläche (48) des Gelenkabschnitts (26) des Blatts (24) zusammenwirkt, um die Drehung des Schuhs (32) in Bezug auf das Blatt (24) zu blockieren.

10. Scheibenwischer nach einem der vorherigen Ansprüche, **dadurch gekennzeichnet, dass** der Antifriktionsschuh (32) mehrere Federlaschen (50) aufweist.

11. Scheibenwischer nach einem der vorherigen Ansprüche, **dadurch gekennzeichnet, dass** er zwei Antifriktionsschuhe (32) aufweist, die jeweils in Querrichtung auf einer Seite des Gelenkabschnitts (26) des Blatts (24) angeordnet sind.

## Claims

1. A motor vehicle wiper of the type having a wiper blade (24) which is articulated about a transverse axis (A1) at a free longitudinal end (14) of a wiper arm (12), of the type in which an articulation portion (26) of the blade (24) is received inside the free end (14) of the arm (12) which is in the form of a fork and which has two longitudinal lateral wings (16), and of the type in which there is provided an anti-friction shoe (32) arranged between the articulation portion (26) of the blade (24) and an internal face (30) of at least one of the wings (16) of the fork (14),
**characterised in that** the anti-friction shoe (32) has a plate element (36) which is parallel to the wing (16) of the fork (32) and which is provided with at least one elastic lug (50) projecting transversely with respect to the plate element (36) so that the shoe (32) is able to take up a transverse clearance between the fork (14) and the articulation portion (26) of the blade (24),
and **in that** the plate element (36) is fixed to a first one (24) of the two articulated components (12, 24) of the wiper (10) by elastic nesting means (28, 38) which keep the anti-friction shoe (32) pressed against the opposite lateral face (34) of the first (24) of the two articulated components (12, 24), the elastic lug (50) being in abutment transversely against the second (12) of the two articulated components (12, 24) of the wiper (10).

2. A wiper according to Claim 1, **characterised in that** the lug (50) is formed by a partial cutout in the plate element (36), the lug (50) being connected to the latter by a connecting end (56), and **in that** the lug (50) has a free end (52) which is offset transversely with respect to the plate element (36).

3. A wiper according to Claim 2, **characterised in that** the elastic lug (50) can be folded over so as to be contained in the transverse thickness of the plate element (36).

4. A wiper according to any one of the preceding claims, **characterised in that** the anti-friction shoe (32) has a lateral face (58, 60) which is provided with at least one recess (62, 64).

5. A wiper according to any one of the preceding claims, **characterised in that** the shoe (32) has a cylindrical stud (38) of transverse axis (A1) which is nested elastically in a corresponding orifice (28) in the first (24) of the two articulated components (12, 24) of the wiper.

6. A wiper according to Claim 5, **characterised in that** the cylindrical stud (38) is tubular and split in the axial direction so as to be able to be elastically compressed radially towards the inside.

7. A wiper according to Claim 6, **characterised in that** an articulation rod (22) for the two components (12, 24) of the wiper (10) is inserted axially through the tubular cylindrical stud (38).

8. A wiper according to any one of the preceding claims, **characterised in that** the anti-friction shoe (32) is fixed on an external lateral face (34) of the articulation portion (26) of the wiper blade (24).

9. A wiper according to Claim 8, **characterised in that** the shoe (32) has a flange (44) which extends transversely towards the inside from an internal edge of the plate element (36) and which cooperates with a bottom edge (46) of the lateral face (48) of the articulation portion (26) of the blade (24) in order to immobilise the shoe (32) in rotation with respect to the blade (24).

10. A wiper according to any one of the preceding claims, **characterised in that** the anti-friction shoe (32) has several elastic lugs (50).

11. A wiper according to any one of the preceding claims, **characterised in that** it has two anti-friction shoes (32) each arranged transversely on one side of the articulation portion (26) of the blade (24).
